# EUROPEAN PATENT APPLICATION

(11) **EP 3 239 683 A1**
(43) Date of publication of application: **01.11.2017**
(21) Application number: 17168080.4
(22) Date of filing: 25.04.2017
(51) Int. Cl.: G01L 19/02, G01L 27/00, G01L 19/12

(54) **CORRECTION OF PRESSURE MEASUREMENTS IN ENGINES**

(30) Priority: 25.04.2016 US 201662327117 P; 02.12.2016 US 201615367577
(71) Applicant: Pratt & Whitney Canada Corp., Longueuil, Québec J4G 1A1 (CA)
(72) Inventor: RICCI, Thomas Trevor, Longueuil, Québec J4G 1A1 (CA); DAY, Christopher Bryan, Longueuil, Québec J4G 1A1 (CA)
(74) Representative: Hull, James Edward

(57) **Abstract**

Methods and systems for automatically detecting and calculating an offset of an engine-based pressure measurement transducer after engine shutdown, and applying a correction factor to subsequent pressure measurements of the transducer once the engine is in operation.

## Description

### TECHNICAL FIELD

The present disclosure relates generally to correcting errors in measurements of pressure transducers and more particularly, to correcting errors in pressure transducer measurements for engines.

### BACKGROUND OF THE ART

When pressure transducers are fabricated, they necessarily have a small variation from a nominal value. This small variation is accounted for in an initial calibration of the transducer at the time of installation. However, this calibration is performed only once, before the transducer is in use. Pressure transducers are susceptible to drift over time, depending on the conditions in which they operate and other factors. This drift is not accounted for by the initial calibration and it may impact the accuracy of the transducer in the medium to long term.

Therefore, there is a need to address this issue.

### SUMMARY

The present disclosure describes methods and systems for automatically detecting and calculating an offset of an engine-based pressure measurement transducer after engine shutdown, and applying a correction factor to subsequent pressure measurements of the transducer once the engine is in operation. The offset is due to a drift (also known as a shift) of the transducer over time.

In accordance with a first aspect, there is provided a method for correcting a pressure measurement of a transducer on an engine. The method comprises detecting an engine-off condition; obtaining an ambient pressure measurement from the transducer while the engine is in the engine-off condition; determining an offset of the ambient pressure measurement with a reference ambient pressure; and applying the offset as a correction factor to pressure measurements of the transducer when the engine is in operation subsequent to the engine-off condition.

In some embodiments, the transducer is a differential pressure transducer and the reference ambient pressure is zero psi.

In some embodiments, the method further comprises obtaining the reference ambient pressure from a reference transducer in the aircraft.

In some embodiments, the reference transducer is mounted inside an engine controller.

In some embodiments, the reference transducer is mounted inside an aircraft controller.

In some embodiments, the method is performed inside an engine controller.

In some embodiments, the method is repeated every time the engine shuts down.

In some embodiments, the method further comprises monitoring the correction factor over time, and triggering a warning signal when the correction factor reaches a threshold.

In some embodiments, the method further comprises monitoring changes to the correction factor over time, and triggering a warning signal when the correction factor is changed a predetermined number of times.

In some embodiments, the method further comprises monitoring changes to the correction factor over time, and triggering a warning signal when a change to the correction factor is greater than a threshold.

In accordance with a further aspect, there is provided a system for correcting a pressure measurement of a transducer on an engine. The system comprises a processing unit; and a non-transitory memory communicatively coupled to the processing unit and comprising computer-readable program instructions. The instructions are executable by the processing unit for detecting an engine-off condition; obtaining an ambient pressure measurement from the transducer while the engine is in the engine-off condition; determining an offset of the ambient pressure measurement with a reference ambient pressure; and applying the offset as a correction factor to pressure measurements of the transducer when the engine is in operation subsequent to the engine-off condition.

In some embodiments, the transducer is a differential pressure transducer and the reference ambient pressure is zero psi.

In some embodiments, the program instructions are further executable for obtaining the reference ambient pressure from a reference transducer in the aircraft.

In some embodiments, the reference transducer is mounted inside an engine controller.

In some embodiments, the reference transducer is mounted inside an aircraft controller.

In some embodiments, wherein the processing unit is inside an engine controller.

In some embodiments, the program instructions are further executable for repeating the detecting, obtaining, and determining steps every time the engine shuts down.

In some embodiments, the program instructions are further executable for monitoring the correction factor over time, and triggering a warning signal when the correction factor reaches a threshold.

In some embodiments, the program instructions are further executable for monitoring changes to the correction factor over time, and triggering a warning signal when the correction factor is changed a predetermined number of times.

In some embodiments, the program instructions are further executable for monitoring changes to the correction factor over time, and triggering a warning signal when a change to the correction factor is greater than a threshold.

In accordance with a further aspect, there is provided a non-transitory computer-readable medium comprising a set of instructions for implementing a method for correcting a pressure measurement of a transducer on an engine.

### BRIEF DESCRIPTION OF THE DRAWINGS

Further features and advantages of the present invention will become apparent from the following detailed description, taken in combination with the appended drawings, in which:
Figure 1 is a functional block diagram of an aircraft, in accordance with one embodiment;
Figure 2 is a flowchart of a method for correcting a pressure measurement of a transducer on an engine, in accordance with one embodiment;
Figure 3 is a functional block diagram of a drift correcting device, in accordance with one embodiment; and
Figure 4 is a block diagram of a software and hardware implementation of the drift correction device of figure 3, in accordance with one embodiment.

It will be noted that throughout the appended drawings, like features are identified by like reference numerals.

### DETAILED DESCRIPTION

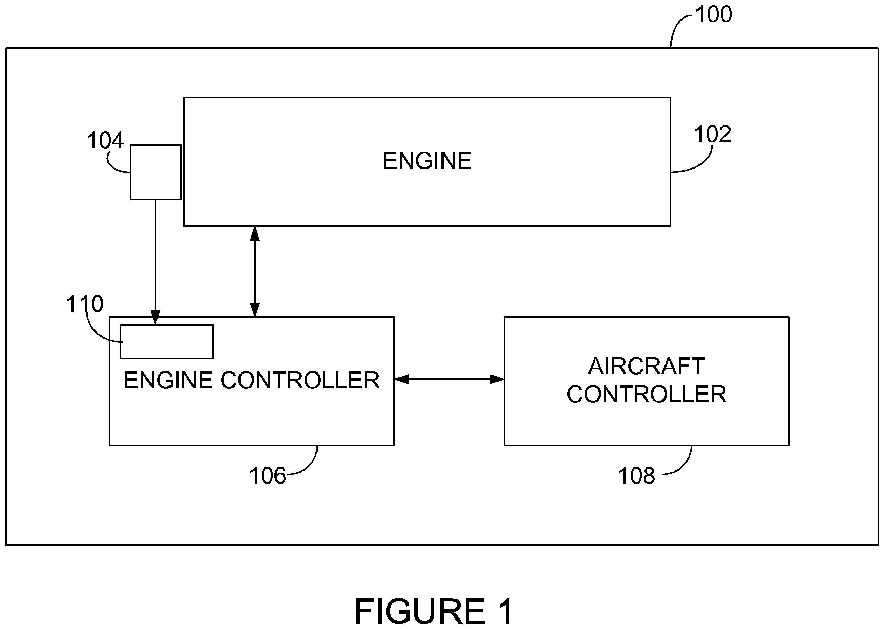

With reference to Figure 1, there is illustrated an aircraft 100 having an engine 102 operatively connected to an engine controller 106. The engine controller 106 is coupled to an aircraft controller 108. The aircraft controller 108 and engine controller 106 are connected by, for example, a communication bus, and at least one data signal is transmitted from the aircraft controller 108 to the engine controller 106. The aircraft 100 may be any type of aircraft 100 having an engine 102 therein, such as a fixed-wing aircraft, a rotary-wing aircraft, and a jet aircraft. The aircraft controller 108 may be an aircraft management controller (AMC), a flight management system (FMS), an aircraft digital computer system, or any other device used for computing inside an aircraft. The engine controller 106 may be any type of computing unit of an engine 102, such as an engine control unit (ECU), an engine electronic controller (EEC), an engine electronic control system, and a Full Authority Digital Engine Controller (FADEC). The engine controller 106 may form part of or be associated with various types of engines 102, such as turboshaft engines, turboprop engines, turbofan engines, and auxiliary power engines (also referred to as auxiliary power units (APU)). The communication bus may be composed of various hardware components, such as one or more electrical wires and/or optical fibers, and software components, and the at least one data signal is transmitted using at least one communication protocol, such as but not limited to the ARINC Standards.

At least one pressure transducer 104 is provided to measure pressure in the environment of the engine 102. The transducer produces an electrical output signal (voltage, current, or frequency) proportional to a measured pressure, and the electrical output signal is transmitted to the engine controller 106. A drift correcting device 110 applies a correction factor to the pressure measurements of the pressure transducer 104 to account for a drift in the accuracy of the transducer 104 over time. The drift may be caused by various factors, such as changes in temperature in the environment of the transducer 104. The drift correcting device 110 determines the drift by measuring an offset of an ambient pressure measurement of the transducer 104 when the engine 102 is off. The drift correcting device 110 then applies an appropriate correction factor to pressure measurements of the transducer 104 when the engine is started again.

In some embodiments, the drift correcting device 110 is configured to dynamically correct drift of the transducer 104 every time the engine starts up, based on the offset determined during a preceding engine shut down. Therefore, as the drift changes over time, the offset is recalculated and a proper correction factor is applied.

While the drift correcting device 110 is shown to form part of the engine controller 106, it may also be provided separately therefrom, such as a standalone device or as part of the aircraft controller 108. In such cases, the transducer 104 may be connected directly to the device 110 or it may be connected to the engine controller 106 which would then transmit the electrical output signal received from the transducer 104 to the drift correcting device 110.

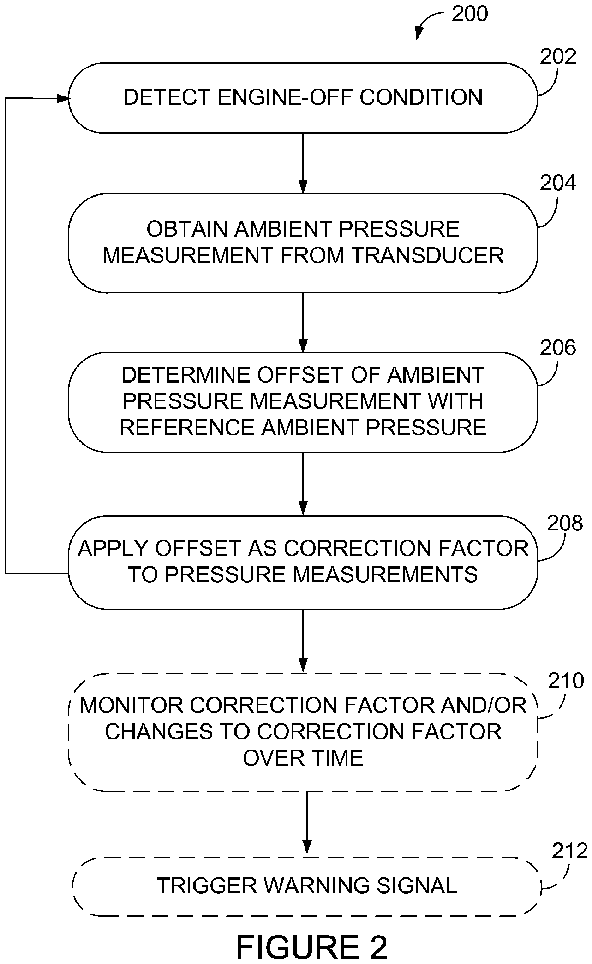

Figure 2 is a flowchart of an exemplary method 200 for correcting the pressure measurement of a transducer 104. At step 202, an engine-off condition is detected. The engine may be in any non-running state when the engine-off condition is met, for example, pre-start, maintenance, pre-shutdown, or shutdown. In some embodiments, the engine-off condition is detected when an engine shutdown signal, or any other signal indicative of the engine-off condition, is received from the engine controller 106. When the drift correcting device 110 is integrated with the engine controller 106, it may be configured to detect the engine-off condition using other known detection techniques, such as monitoring an alternator voltage, rotor RPM, fuel flow, or other engine operation indicators.

At step 204, an ambient pressure measurement is obtained from the transducer while the engine is shutdown. In some embodiments, the transducer 104 is configured to transmit pressure measurements regularly, without prompt. In such cases, the device 110 may be configured to wait for a first measurement to be received after the engine-off condition has been detected. Alternatively, or in combination therewith, the device 110 may be configured to prompt the transducer 104 to transmit a measurement once the engine-off condition has been detected. Also alternatively, the device 110 may be configured to communicate with the engine controller 106 to cause the transducer 104 to provide a pressure measurement.

Once the ambient pressure measurement has been received, an offset of the ambient pressure measurement is determined, as per step 206. The offset corresponds to a difference between the ambient pressure measurement and a reference ambient pressure.

In some embodiments, the pressure transducer 104 is a differential pressure transducer, such as a strain gauge on a diaphragm base transducer, or two strain gauges each on a half bridge. In such cases, while the engine 102 is shutdown, the differential pressure transducer should be zero. In such cases, the reference ambient pressure is zero. The offset therefore corresponds to the ambient pressure measurement. For example, if the ambient pressure measurement is 1 psi, then the offset is 1. The numbers used in this example are for illustrative purposes only.

In some embodiments, the pressure transducer is an absolute pressure transducer, such as a strain-gauge base transducer. In such cases, the method may comprise a step of obtaining the reference ambient pressure from a reference transducer (not shown) in the aircraft 100. The reference transducer may be provided anywhere in the aircraft such that its measurement of ambient pressure is equivalent to the ambient pressure. For example, the reference transducer may be mounted inside the engine controller 106 or inside the aircraft controller 108. In another example, the reference transducer may be provided adjacent to the transducer 104, on the engine 102, and be of a known greater accuracy than the transducer 104. In some embodiments, the reference transducer is validated with a third transducer, also referred to as a "third party voter", The third transducer may be provided anywhere in the aircraft 100, such as in the aircraft controller 108, the engine controller 106, or elsewhere.

In some embodiments, the pressure transducer is a high accuracy absolute pressure transducer (PSIA transducer) or a gage pressure transducer (PSIG transducer).

The reference transducer may provide reference measurements at regular intervals directly to the drift correcting device 110, or to another device, such as the engine controller 106 or the aircraft controller 108, which may in turn provide such measurements to the device 110. The drift correcting device 110 may also retrieve the reference measurements from a storage medium.

When using a reference ambient pressure other than zero, the offset is determined by subtracting the reference ambient pressure from the ambient pressure measurement. For example, if the ambient pressure measurement is 3 psi and the reference ambient pressure is 1 psi, then the offset is 3 - 1 = 2. Similarly, if the ambient pressure measurement is 1 psi and the reference ambient pressure is 3 psi, then the offset is 1 - 3 = -2.

At step 208, the offset is applied as a correction factor to future pressure measurements of the transducer 104. That is to say, when the engine is started up again and is in operation, a correction factor is applied to the pressure measurements from the transducer in order to correct for the offset. As the offset was determined by subtracting the reference ambient pressure from the ambient pressure measurement, the correction factor is the negative value of the offset, i.e. - (offset). Of course, the offset may be calculated by subtracting the ambient pressure measurement from the reference ambient pressure. In such cases, the correction factor corresponds to the offset.

In some embodiments, the correction factor is applied consistently throughout the temperature range of the transducer. For example, the same correction factor is applied when the transducer 104 is measuring a pressure value at 0° Celsius as when the transducer 104 is measuring a pressure value at 60 ° Celsius. In addition, the offset may be recalculated regularly, such as every time the engine shuts down, every second time the engine shuts down, every third time the engine shuts down, etc. Alternatively, the offset may be recalculated as a function of engine operating time. For example, the offset may be recalculated at engine shut down after every 1 hour of engine operation, 2 hours of engine operation, 3 hours of engine operation, etc. Also alternatively, or in combination therewith, the offset may be recalculated at engine shut down after the engine temperature has reached a certain threshold temperature. For example, if the engine operates under 30°, no recalculation is preformed, but when the engine operates at or greater than 30°, then a recalculation is performed at the next engine shut down. In some embodiments, the offset is recalculated after the transducer 104 has been exposed to a certain threshold temperature a predetermined number of times. For example, after the transducer 104 has been exposed to 60° five times, the offset is recalculated at the next engine shut down.

In some embodiments, the transducer's accuracy varies, linearly or nonlinearly, across its domain. In such cases, the correction factor may be applied to match the variations of the transducer.

Determination of whether to recalculate the offset may be performed by the drift correcting device 110. Alternatively, this determination may be performed by the engine controller 106 or the aircraft controller 108 and a control signal may be transmitted from the engine controller 106 or aircraft controller 108, respectively, to the drift correcting device 110 in order to perform the method 200.

In some embodiments, the method 200 further comprises a step 210 of monitoring the correction factor and/or changes to the correction factor over time. Monitoring may be used to trigger a warning signal, as per step 212, when one or more monitoring condition is met. The monitoring condition may correspond to, for example, the correction factor/offset reaching a threshold and/or the correction factor/offset having been changed a predetermined number of times. Any one of these conditions may be an indication of a need for maintenance and/or repair. In some embodiments, the condition corresponds to any single change in the correction factor/offset from a preceding setting to a current setting being greater than a predetermined threshold. This condition may also be indicative of an issue in the transducer 104, the engine 102, or the general environment thereof. The warning signal may take various forms, such as a signal to cause a maintenance flag to be set, or a signal sent to the engine controller 106 and/or the aircraft controller 108, such that it be further processed. Other conditions may also be used.

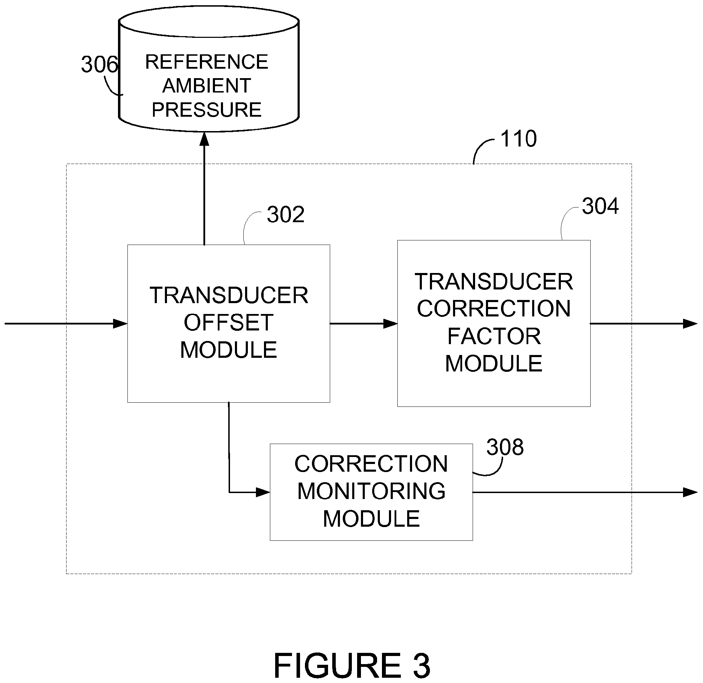

Figure 3 is a block diagram of an exemplary embodiment for the drift correction device 110. A transducer offset module 302 is configured to detect the engine-off condition, as per step 202 of method 200, obtain the ambient pressure measurement from the transducer 104, as per step 204, and determine the offset of the ambient pressure measurement with the reference ambient pressure, as per step 206. The transducer offset module 302 may be coupled to a database 306 storing one or more reference ambient pressures. The offset, once determined, is provided to a transducer correction factor module 304. The transducer offset module 302 is thus configured to be in operation while the engine 102 is shut down.

The transducer correction factor module 304 is configured to be in operation while the engine 102 is in operation. It applies the offset, as received from the transducer offset module 302, as a correction factor to pressure measurements obtained from the transducer 104, as per step 208 of method 200. The transducer correction factor module 304 may be configured to output the correction factor or to output the pressure measurement with the correction factor applied thereto.

A correction monitoring module 308 is illustratively coupled to the transducer offset module 302 so as to monitor the offset and/or changes to the offset over time, as per step 210 of method 200. The correction monitoring module 308 may also be coupled to the transducer correction factor module 304 and configured to monitor the correction factor and/or changes to the correction factor over time. When any one of the monitoring conditions are met, a trigger signal is output, as per step 212 of method 200.

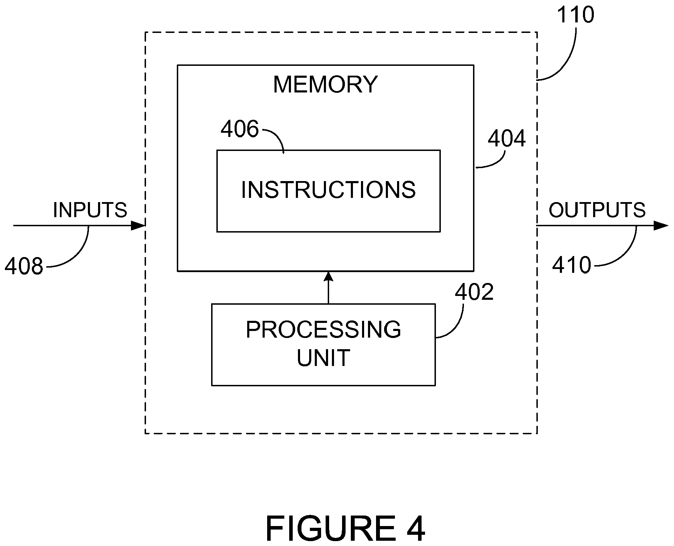

Figure 4 shows a schematic representation of the drift correcting device 110, as a combination of software and hardware components. The device 110 may comprise one or more processing units 402 and one or more computer-readable memories 404 storing machine-readable instructions 406 executable by the processor 402 and configured to cause the processor 402 to generate one or more outputs 410 based on one or more inputs 408. The inputs may comprise one or more signals representative of the measured pressure. The outputs 410 may comprise one or more signals for applying a correction factor to a pressure measurement of the transducer 104.

Processing unit 402 may comprise any suitable devices configured to cause a series of steps to be performed by device 110 so as to implement a computer-implemented process such that instructions 406, when executed by device 110 or other programmable apparatus, may cause the functions/acts specified in the methods described herein to be executed. Processing unit 402 may comprise, for example, any type of general-purpose microprocessor or microcontroller, a digital signal processing (DSP) processor, an integrated circuit, a field programmable gate array (FPGA), a reconfigurable processor, other suitably programmed or programmable logic circuits, or any combination thereof.

Memory 404 may comprise any suitable known or other machine-readable storage medium. Memory 404 may comprise non-transitory computer readable storage medium such as, for example, but not limited to, an electronic, magnetic, optical, electromagnetic, infrared, or semiconductor system, apparatus, or device, or any suitable combination of the foregoing. Memory 404 may include a suitable combination of any type of computer memory that is located either internally or externally to device 110 such as, for example, random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory 404 may comprise any storage means (e.g. devices) suitable for retrievably storing machine-readable instructions 406 executable by processing unit 402.

Various aspects of the present disclosure may be embodied as systems, devices, methods and/or computer program products. Accordingly, aspects of the present disclosure may take the form of an entirely hardware embodiment, an entirely software embodiment (including firmware, resident software, microcode, etc.) or an embodiment combining software and hardware aspects. Furthermore, aspects of the present disclosure may take the form of a computer program product embodied in one or more non-transitory computer readable medium(ia) (e.g., memory 404) having computer readable program code (e.g., instructions 406) embodied thereon. The computer program product may, for example, be executed by a computer to cause the execution of one or more methods disclosed herein in entirety or in part.

Computer program code for carrying out operations for aspects of the present disclosure in accordance with instructions 406 may be written in any combination of one or more programming languages, including an object oriented programming language such as Java, Smalltalk, C++ or the like and conventional procedural programming languages, such as the "C" programming language or other programming languages. Such program code may be executed entirely or in part by a computer or other data processing device(s). It is understood that, based on the present disclosure, one skilled in the relevant arts could readily write computer program code for implementing the methods disclosed herein.

The above description is meant to be exemplary only, and one skilled in the relevant arts will recognize that changes may be made to the embodiments described without departing from the scope of the invention disclosed. For example, the blocks and/or operations in the flowcharts and drawings described herein are for purposes of example only. There may be many variations to these blocks and/or operations without departing from the teachings of the present disclosure. For instance, the blocks may be performed in a differing order, or blocks may be added, deleted, or modified. The structure illustrated is thus provided for efficiency of teaching the present embodiment. The present disclosure may be embodied in other specific forms without departing from the subject matter of the claims. Also, one skilled in the relevant arts will appreciate that while the systems, methods and computer readable mediums disclosed and shown herein may comprise a specific number of elements/components, the systems, methods and computer readable mediums may be modified to include additional or fewer of such elements/components. The present disclosure is also intended to cover and embrace all suitable changes in technology. Modifications which fall within the scope of the present invention will be apparent to those skilled in the art, in light of a review of this disclosure, and such modifications are intended to fall within the appended claims.

## Claims

1. A method for correcting a pressure measurement of a transducer on an engine, the method comprising:
detecting an engine-off condition;
obtaining an ambient pressure measurement from the transducer while the engine is in the engine-off condition;
determining an offset of the ambient pressure measurement with a reference ambient pressure; and
applying the offset as a correction factor to pressure measurements of the transducer when the engine is in operation subsequent to the engine-off condition.

2. The method of claim 1, wherein the transducer is a differential pressure transducer and the reference ambient pressure is zero psi.

3. The method of claims 1 or 2, further comprising obtaining the reference ambient pressure from a reference transducer in the aircraft.

4. The method of claim 3, wherein the reference transducer is mounted inside an engine controller or inside an aircraft controller.

5. The method of any preceding claim, wherein the method is performed inside an engine controller and/or is repeated every time the engine shuts down.

6. The method of any preceding claim, further comprising:
monitoring the correction factor over time; and
triggering a warning signal when the correction factor reaches a threshold and/or when the correction factor is changed a predetermined number of times, and/or when a change to the correction factor is greater than a threshold.

7. A system for correcting a pressure measurement of a transducer on an engine, the system comprising:
a processing unit; and
a non-transitory memory communicatively coupled to the processing unit and comprising computer-readable program instructions executable by the processing unit for:
detecting an engine-off condition;
obtaining an ambient pressure measurement from the transducer while the engine is in the engine-off condition;
determining an offset of the ambient pressure measurement with a reference ambient pressure; and
applying the offset as a correction factor to pressure measurements of the transducer when the engine is in operation subsequent to the engine-off condition.

8. The system of claim 7, wherein the transducer is a differential pressure transducer and the reference ambient pressure is zero psi.

9. The system of claims 7 or 8, wherein the program instructions are further executable for obtaining the reference ambient pressure from a reference transducer in the aircraft.

10. The system of claim 9, wherein the reference transducer is mounted inside an engine controller or inside an aircraft controller.

11. The system of any one of claims 7 to 10, wherein the processing unit is inside an engine controller.

12. The system of any one of claims 7 to 11, wherein the program instructions are further executable for repeating the detecting, obtaining, and determining steps every time the engine shuts down.

13. The system of any one of claims 7 to 12, wherein the program instructions are further executable for:
monitoring the correction factor over time; and
triggering a warning signal when the correction factor reaches a threshold.

14. The system of any one of claims 7 to 13, wherein the program instructions are further executable for:
monitoring changes to the correction factor over time; and
triggering a warning signal when the correction factor is changed a predetermined number of times.

15. The system of any one of claims 7 to 14, wherein the program instructions are further executable for:
monitoring changes to the correction factor over time; and
triggering a warning signal when a change to the correction factor is greater than a threshold.
